# FASCICULE DE BREVET EUROPEEN

(11) **EP 0 664 633 B1**
(45) Date de publication et mention de la délivrance du brevet: **22.10.1997**
(21) Numéro de dépôt: 95470001.9
(22) Date de dépôt: 19.01.1995
(51) Int. Cl.: H04M 1/274

(54) **Dispositif de production de signaux acoustiques, transmissibles par voie téléphonique**
Einrichtung zur Erzeugung und Übertragung von akustischen Signalen über Telefonleitungen
Device for generating acoustic signals and transmitting the same on a telephone line

(30) Priorité: 25.01.1994 FR 9400924
(43) Date de publication de la demande: 26.07.1995
(73) Titulaire: GEMPLUS CARD INTERNATIONAL, F-13420 Gémenos (FR)
(72) Inventeur: Martin, Philippe, Cabinet Ballot Schmit, F-57000 Metz (FR); Leduc, Michel, Cabinet Ballot Schmit, F-57000 Metz (FR)
(74) Mandataire: Schmit, Christian Norbert Marie

(56) Documents cités:
- WO-A-92/20048
- DE-A- 4 218 124
- US-A- 4 995 077
- US-A- 5 181 744
- PATENT ABSTRACTS OF JAPAN vol. 13, no. 110 (E-728) 16 Mars 1989 & JP-A-63 283 260 (YUNIFURETSUKUSU MAAKETEINGU)

## Description

La présente invention concerne un dispositif de production de signaux acoustiques transmissibles par voie téléphonique.

On connaît le procédé de transmission de données par des signaux à fréquence vocale, selon le principe de codage de données par un couple de fréquence, couramment utilisé dans le domaine des communications téléphoniques, dans la gamme de fréquence de 300 à 3000 Hz, sous l'appellation DTMF (Dual Tone Modulation Frequency) que l'on utilisera par la suite. En téléphonie, les signaux DTMF sont utilisés pour la numérotation, la transmission de codes, etc...

De ce fait, les circuits existants de génération de signaux DTMF, fabriqués en de très nombreux exemplaires, sont des circuits qui ont été conçus pour être intégrés dans des téléphones et donc pour être interfacés directement sur la ligne téléphonique, et ils sont adaptés pour être couplés avec des haut-parleurs pour générer les séquences sonores.

Par ailleurs, on connaît d'autres dispositifs de production de signaux acoustiques permettant de générer des signaux DTMF. La réalisation de ces dispositifs, utilisant la technologie développée pour les postes téléphoniques, est également basée sur des technologies de circuits prévus pour piloter un haut-parleur. Par exemple, on connaît des dispositifs de type jeton ou calculette permettant la génération de codes, par exemple pour la numérotation lors d'un appel téléphonique. Ce type de dispositif permet d'éviter la composition du numéro d'appel sur le clavier du poste téléphonique. Il suffit de placer le dispositif face au combiné, le dispositif générant les séquences DTMF nécessaires pour établir la liaison, selon le code correspondant au numéro d'appel, mémorisé dans le dispositif.

Un problème est que ces dispositifs, utilisant une technologie haut-parleur, sont relativement encombrants en épaisseur, de l'ordre de 15 mm.

Le document US-A-4995077 décrit un tel dispositif réalisé sous forme d'une carte et utilisant un haut-parleur. Il y est mentionné que l'épaisseur peut être réduite grâce à l'utilisation d'un transducteur réalisé à partir d'un film piézoélectrique.

On connaît par le document WO-A-92/20048 un tel dispositif dans lequel un transducteur formé de matériau piezzo électrique est enserré dans une plaque formant corps de carte entre deux feuilles placées respectivement sur chaque face de la plaque.

La présente invention vise à fournir un dispositif du type décrit précédemment pour la production de signaux acoustiques transmissibles par voie téléphonique, de faible épaisseur, autorisant notamment son insertion dans un portefeuille et présentant des caractéristiques acoustiques améliorées.

Avec ces objectifs en vue, l'invention a pour objet un dispositif de production de signaux acoustiques transmissibles par voie téléphonique, comportant un circuit de génération de signaux à fréquence vocale couplé avec un transducteur sonore, le dispositif étant réalisé sous forme d'une carte de faible épaisseur comportant un corps de carte dans lequel est ménagée une cavité réalisée sur toute l'épaisseur du corps de carte, et deux feuilles fixées respectivement sur les deux faces du corps, une première de ces feuilles étant en matière plastique rigide ou semi-rigide, caractérisé en ce que le transducteur sonore est un buzzer fixé au fond de la cavité en étant collé sur la dite première feuille, et ménageant une cavité formant chambre acoustique entre sa face avant et la deuxième feuille.

Grâce à l'utilisation d'un transducteur piezzo acoustique, couramment appelé buzzer, vibreur ou vibrateur, l'invention permet de réaliser un dispositif au format d'une carte à puce, avec une faible épaisseur, égale ou proche de l'épaisseur normalisée de ces cartes, c'est-à-dire voisine de 0,8 mm, mais pouvant aller de quelques dixièmes de mm à 1,6 mm.

La réalisation de la cavité sur toute l'épaisseur du corps et la fixation du buzzer sur la feuille rigide obstruant la cavité sur une face permettent d'obtenir, malgré la faible épaisseur du dispositif, une cavité résonnante en avant du buzzer offrant des performances acoustiques optimales. La liaison rigide du buzzer avec la feuille plastique entraîne la résonnance de l'ensemble du dispositif et, en combinaison avec une chambre acoustique de volume approprié, constituée par la cavité du corps, permet d'obtenir les meilleurs résultats en ce qui concerne la performance acoustique de l'ensemble.

Préférentiellement, le buzzer est collé par sa périphérie sur la dite première feuille, en ménageant entre la partie centrale du buzzer et la dite première feuille, une seconde cavité de faible épaisseur. Par cette disposition, les caractéristiques accoustiques sont encore améliorées.

D'autres caractéristiques et avantages apparaîtront dans la description qui va être faite d'une carte de génération de signaux DTMF, conforme à l'invention.

On se reportera aux dessins annexés dans lesquels :
- la figure 1 est une vue partielle en coupe de la carte dans la zone de fixation du buzzer,
- la figure 2 est une autre vue en coupe montrant la disposition des composants à l'intérieur de la carte,
- la figure 3 est une vue schématique en plan du circuit électronique.

La carte 1 est une carte au format classique des cartes à puce selon la norme ISO 78.16-12, ou à un format proche du format normalisé, et ayant une épaisseur de l'ordre de 0,8 mm. Elle comporte un corps de carte 2 dans lequel est réalisé une cavité 3 sur toute l'épaisseur du dit corps. Le corps de carte 2 est en matière plastique renforcée.

Une première feuille 4 en matière plastique rigide ou semi-rigide, par exemple en polycarbonate de 150 à 200 µm d'épaisseur, est collée sur une face du corps 2 par un adhésif 5.

Une seconde feuille 6 est collée de même sur l'autre face du corps de carte 2. Cette feuille est une fine feuille métallique, d'environ 150 µm d'épaisseur.

La carte comporte un buzzer piezzo-céramique 10 situé dans la cavité 3 et collé, par un adhésif 8, sur la feuille en polycarbonate 4. Le buzzer 10 est collé sur la feuille 4 par sa périphérie, laissant sa partie centrale libre, par exemple sur un diamètre de 18 à 22 mm. Ceci permet de ménager une cavité 3' à l'arrière du buzzer, entre celui-ci et la feuille 4, d'une épaisseur faible, de l'ordre de 50 µm, correspondant à l'épaisseur de l'adhésif utilisé, mais suffisante pour permettre au buzzer de fonctionner correctement. Du côté de sa face avant, la faible épaisseur du buzzer laisse subsister entre celui-ci et la feuille métallique 6, un espace constituant une chambre acoustique dont le volume permet d'optimiser la performance acoustique de l'ensemble. Dans sa partie confrontant le buzzer, la feuille métallique 6 est percée d'une pluralité de trous 7 débouchant dans la cavité 3, par exemple environ seize trous de diamètre 1,1 mm pour un buzzer de 27 mm de diamètre. Le nombre de trous et leurs dimensions peuvent être adaptés en fonction de la surface du buzzer et des dimensions de la cavité 3.

Sur sa face extérieure, la feuille métallique 6 comporte un revêtement au moins partiel, dans la zone des trous 7, d'une couche de matériau ayant des propriétés d'isolation phonique, par exemple en silicone, pour assurer un amortissement convenable lorsque, en cours d'utilisation, la carte est posée contre le combiné téléphonique, et éviter la création de bruits de contacts qui pourraient perturber la transmission des signaux DTMF.

Compte-tenu des faibles dimensions en épaisseur de la carte, les formes et dimensions de la cavité, et les matériaux des deux feuilles, sont adaptés pour une optimisation des performances acoustiques dans la bande passante utile pour les fréquences DTMF. De ce fait, il a été prévu d'amortir la résonnance du buzzer au moyen d'une résistance placée en série dans son circuit pour limiter, voire annuler, les fréquences parasites, harmoniques ou autres, créées par cet ensemble acoustique. La fréquence de résonnance du buzzer doit ainsi être dans la bande de fréquence DTMF, de 0,7 à 1,5 KHz, et sera de préférence d'environ 1,2 KHz.

En effet, les serveurs destinés à reconnaître les séquences DTMF émises par la carte et transmises par voie téléphonique, sont très sensibles au niveau d'harmoniques et de parasites en général. Le rapport signal/bruit constitue un des paramètres les plus délicats pour la réussite des transmissions de données par voie téléphonique utilisant le principe DTMF. Par ailleurs, plus la fréquence de résonnance du buzzer est basse, mieux on arrive à réaliser l'amortissement des vibrations dans la cavité. Ceci conduirait à utiliser un buzzer à couche céramique la plus fine possible ce qui le rendrait très fragile. Cette limitation conduit donc à utiliser un buzzer à couche céramique suffisamment épaisse, susceptible de ce fait d'induire des résonnances parasites. L'utilisation d'une résistance série dans le circuit du buzzer permet d'amortir la résonnance du buzzer et donc d'optimiser la performance acoustique de celui-ci dans l'environnement spécifique de la carte et de la cavité où il est placé.

Par ailleurs, les circuits intégrés courants dédiés à la génération de séquences DTMF, conçus pour être interfacés directement sur la ligne téléphonique, ne sont pas prévus pour piloter un buzzer, leur niveau de sortie ainsi que les impédances offertes étant adaptées à une mise sur la ligne directe du signal. La résistance utilisée en série avec le buzzer permet d'adapter les impédances sans étage adaptateur spécifique, et d'une part autorise donc l'utilisation à moindre frais des circuits courants non prévus à leur origine pour cette application, et d'autre part permet au dispositif d'avoir, par couplage acoustique au travers d'un poste téléphonique quelconque, des performances comparables, en terme de niveau, bande de fréquence, distorsion, différence entre les deux fréquences du couple de fréquences émises, à celles obtenues lorsque les circuits sont directement interfacés sur la ligne.

Le diamètre du buzzer est choisi en tenant compte du fait qu'un petit diamètre serait préférable d'un point de vue mécanique, mais défavorable sur le plan acoustique à cause d'un niveau d'émission plus faible. On choisira donc un buzzer de diamètre relativement grand, tout en restant dans des dimensions acceptables pour son utilisation dans une carte, c'est-à-dire, dans ce cas, un diamètre maximum d'environ 27 mm. Son électrode métallique doit, de plus, être de faible épaisseur, par exemple 0,05 mm, et préférentiellement en acier inoxydable.

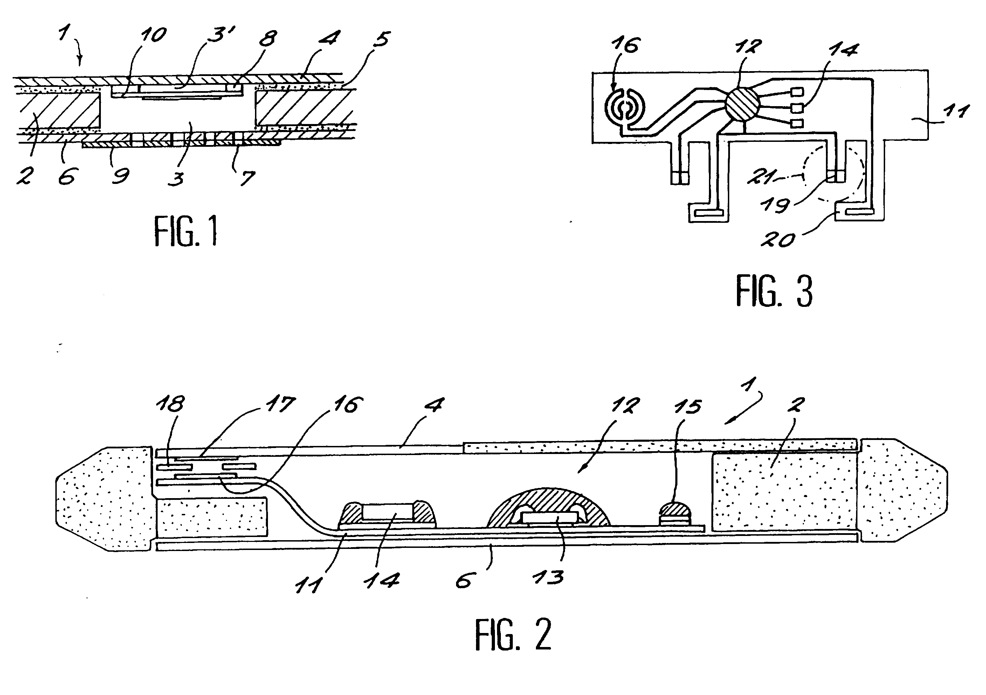

Outre l'obtention de performances acoustiques optimales, la réalisation d'un dispositif de production de signaux DTMF sous forme d'une carte mince impliquait de réaliser les circuits d'alimentation, de génération de signaux DTMF, d'entrée et de mémorisation des données sous une forme compacte, facilement intégrable dans la carte. Les dispositions mises en oeuvre à cet effet vont être décrites ci-dessous en relation avec les figures 2 et 3.

Le circuit général est réalisé sur une feuille souple de mylar 11 portant une piste conductrice constituant un circuit imprimé flexible. Le circuit intégré 12 est réalisé directement sur cette feuille qui lui sert de substrat, sur lequel la puce 13 est collée par une colle conductrice, ses connections étant réalisées en place, selon la technique appelée "bonding" connue par ailleurs pour le montage de composants de type COB (Chip on board). Les composants 14 à montage en surface (CMS) sont assemblée sur la feuille de mylar 11 par une colle conductrice, de même que les éléments 15 de connexion au buzzer 10 et à une pile d'alimentation.

On notera par ailleurs que grâce à l'utilisation d'un support souple, la connexion des éléments tels que pile ou buzzer est grandement facilitée. En effet, comme on le voit sur la figure 3, ces connexions sont réalisées sous forme de languettes 19, 20. Pour connecter par exemple la pile, représentée en traits pointillés 21, il suffit de la coller par de la colle conductrice sur l'extrémité d'une languette 19 et de rabattre l'autre languette 20 de l'autre côté de la pile pour l'y coller de même manière. La connexion du buzzer peut être réalisée de manière similaire.

La technologie d'assemblage par colle conductrice permet une réalisation et un assemblage de tout le circuit à basse température, ce qui évite les risques de détérioration des composants fragiles comme la pile et le buzzer. En particulier, cette technologie permet de raccorder la pile avant la fin de l'assemblage, du fait qu'elle ne risque pas d'être soumise à des températures élevées par la suite, ce qui permet notamment d'effectuer des opérations de test en cours de montage sans avoir besoin d'une alimentation externe. De telles opérations ne seraient pas possibles avec un procédé de montage impliquant des soudures classiques, dans lequel la pile ne peut être mise en place qu'en dernier lieu.

Par ailleurs, l'assemblage ainsi réalisé permet d'obtenir une épaisseur finale très faible particulièrement adaptée à sa mise en place dans la carte 1, ainsi qu'une réduction notable du coût de fabrication.

La feuille de mylar sert aussi de support pour les contacts 16 d'un clavier, destiné par exemple à entrer des données de numérotation ou un code, comportant par ailleurs de manière classique, des pastilles de contact en carbone 17 et des éléments d'espacement isolant 18.

Selon une variante, le clavier peut être réalisé intégralement sur la feuille de mylar 11 en repliant celle-ci sur elle-même, avec interposition d'éléments d'espacements, de manière à pouvoir assurer les contacts du clavier sans utilisation des pastilles de contact 17. Une telle disposition permet donc de réaliser intégralement le circuit et le clavier sur la feuille mylar, et de supprimer les opérations de mise en place des dites pastilles sur la feuille polycarbonate constituant la partie externe du clavier.

## Revendications

1. Dispositif de production de signaux acoustiques transmissibles par voie téléphonique, comportant un circuit de génération de signaux à fréquence vocale couplé avec un transducteur sonore (10), le dispositif étant réalisé sous forme d'une carte (1) de faible épaisseur comportant un corps (2) de carte dans lequel est ménagée une cavité (3) réalisée sur toute l'épaisseur du corps de carte, et deux feuilles (4, 6) fixées respectivement sur les deux faces du corps, une première de ces feuilles (4) étant en matière plastique rigide ou semi-rigide, caractérisé en ce que le transducteur sonore est un buzzer (10) fixé au fond de la cavité en étant collé sur la dite première feuille (4), et ménageant une cavité formant chambre acoustique entre sa face avant et la deuxième feuille (6).

2. Dispositif selon la revendication 1, caractérisé en ce que le buzzer est collé par sa périphérie sur la dite première feuille (4), en ménageant entre la partie centrale du buzzer et la dite première feuille, une seconde cavité (3') de faible épaisseur.

3. Dispositif selon la revendication 2, caractérisé en ce que la seconde cavité (3') a une épaisseur de 20 à 80 µm et un diamètre d'environ 70% du diamètre du buzzer.

4. Dispositif selon l'une des revendications 1 à 3, caractérisé en ce que la seconde feuille (6) fixée sur l'autre face du corps de carte, est pourvue d'orifices (7) débouchant dans la cavité (3).

5. Dispositif selon l'une des revendications 1 à 4, caractérisé en ce que la seconde feuille (6) est une feuille métallique mince.

6. Dispositif selon l'une des revendications 4 ou 5, caractérisé en ce que la seconde feuille comporte un revêtement (9) au moins partiel, d'un matériau d'isolation phonique.

7. Dispositif selon l'une quelconque des revendications précédentes, caractérisé en ce que le circuit de génération de signaux comporte un circuit intégré (12) de génération de signaux DTMF connecté avec le buzzer (10) par une résistance en série.

8. Dispositif selon l'une quelconque des revendications précédentes, caractérisé en ce qu'il comporte une feuille souple (11) sur laquelle est réalisée le circuit électrique.

9. Dispositif selon la revendication 8, caractérisé en ce qu'il comporte un circuit intégré (12) réalisé directement sur la feuille souple.

10. Dispositif selon la revendication 9, caractérisé en ce que la puce (13) du circuit intégré est collée sur la feuille souple par une colle conductrice.

11. Dispositif selon l'une des revendications 8 à 10, caractérisé en ce que les composants (14) du circuit du type montés en surface, et la pile et le buzzer (10) sont reliés au circuit imprimé sur la feuille souple par une colle conductrice.

12. Dispositif selon l'une des revendications 8 à 11, caractérisé en ce qu'il comporte un clavier (16, 17, 18) réalisé par un repli de la feuille souple sur elle-même, en interposant au niveau de ce repli des éléments d'espacement isolants (18).

## Patentansprüche

1. Vorrichtung zur Erzeugung von akustischen Signalen, die über eine Telefonleitung übertragbar sind, die einen Generatorschaltkreis für Signale mit hörbarer Frequenz, der mit einem Schallgeber (10) verbunden ist, umfaßt, wobei die Vorrichtung in Form einer Karte (1) geringer Dicke hergestellt ist, die einen Körper (2) der Karte in welchem ein Hohlraum (3) über der gesamten Dicke des Körpers der Karte ausgespart ist und zwei Blätter (4, 6), die jeweils auf den beiden Flächen des Körpers befestigt sind, wobei ein erstes dieser Blätter (4) aus steifem oder halbsteifem Plastikmaterial besteht, umfaßt,
dadurch gekennzeichnet, daß
der Schallgeber ein Summer (10) ist, der am Boden des Hohlraums befestigt ist, indem er auf das erste Blatt (4) geklebt ist, und der einen Hohlraum ausspart, der eine akustische Kammer zwischen seiner Vorderfläche und dem zweiten Blatt (6) bildet.

2. Vorrichtung nach Anspruch 1, dadurch gekennzeichnet, daß der Summer an seinem Rand auf das besagte erste Blatt (4) geklebt ist, wobei zwischen dem Zentralabschnitt des Summers und dem ersten Blatt ein zweiter Hohlraum (3') geringer Dicke ausgespart bleibt.

3. Vorrichtung nach Anspruch 2, dadurch gekennzeichnet, daß der zweite Hohlraum (3') eine Dicke von 20 bis 80 µm und einen Durchmesser von etwa 70 % des Durchmessers des Summers hat.

4. Vorrichtung nach einem der Ansprüche 1 bis 3, dadurch gekennzeichnet, daß das auf der anderen Fläche des Körpers der Karte befestigte zweite Blatt (6) mit Öffnungen (7), die in den Hohlraum (3) hineingehen, versehen ist.

5. Vorrichtung nach einem der Ansprüche 1 bis 4, dadurch gekennzeichnet, daß das zweite Blatt (6) eine dünne Metallfolie ist.

6. Vorrichtung nach einem der Ansprüche 4 oder 5, dadurch gekennzeichnet, daß das zweite Blatt wenigstens teilweise eine Beschichtung (9) aufweist, die aus einem Schallisolationsmaterial besteht.

7. Vorrichtung nach einem der vorangehenden Ansprüche, dadurch gekennzeichnet, daß der Schaltkreis zur Erzeugung von Signalen einen integrierten Schaltkreis (12) zur Erzeugung von DTMF-Signalen umfaßt, der mit dem Summer über einen seriellen Widerstand verbunden ist.

8. Vorrichtung nach einem der vorangehenden Ansprüche, dadurch gekennzeichnet, daß sie eine flexible Folie (11) umfaßt, auf welcher sich der elektrische Schaltkreis befindet.

9. Vorrichtung nach Anspruch 8, dadurch gekennzeichnet, daß sie einen integrierten Schaltkreis (12) aufweist, der sich direkt auf der flexiblen Folie befindet.

10. Vorrichtung nach Anspruch 9, dadurch gekennzeichnet, daß der Chip (13) des integrierten Schaltkreises auf die flexible Folie mit einem leitfähigen Kleber aufgeklebt ist.

11. Vorrichtung nach einem der Ansprüche 8 bis 10, dadurch gekennzeichnet, daß die Bestandteile (14) des Schaltkreises vom oberflächenmontierten Typ und die Batterie und der Summer (10) mit dem gedruckten Schaltkreis verbunden sind, der auf der flexiblen Folie mit einem leitfähigen Kleber aufgebracht ist.

12. Vorrichtung nach einem der Ansprüche 8 bis 11, dadurch gekennzeichnet, daß sie eine Tastatur (16, 17, 18) umfaßt, die durch eine Falte der flexiblen Folie auf sich selbst realisiert ist, wobei in Höhe dieser Falte isolierende Abstandselemente (18) angebracht sind.

## Claims

1. Device for producing acoustic signals which can be transmitted telephonically, having a circuit for generating voice-frequency signals coupled with a sound transducer (10), the device being produced in the form of a thin card (1) having a card body (2) in which is formed a cavity (3) produced over the entire thickness of the card body, and two sheets (4, 6) fixed respectively to the two faces of the body, a first one of these sheets (4) being made from rigid or semirigid plastic, characterised in that the sound transducer is a buzzer (10) fixed to the base of the cavity, being bonded to the said first sheet (4), and producing a cavity forming an acoustic chamber between its front face and the second sheet (6).

2. Device according to Claim 1, characterised in that the buzzer is bonded by its periphery to the said first sheet (4), forming between the central part of the buzzer and the said first sheet a thin second cavity (3').

3. Device according to Claim 2, characterised in that the second cavity (3') has a thickness of 20 to 80 µm and a diameter of approximately 70% of the diameter of the buzzer.

4. Device according to one of Claims 1 to 3, characterised in that the second sheet (6) fixed to the other face of the card body is provided with orifices (7) opening out into the cavity (3).

5. Device according to one of Claims 1 to 4, characterised in that the second sheet (6) is a thin metallic sheet.

6. Device according to one of Claims 4 or 5, characterised in that the second sheet has an at least partial cladding (9) of a sound-insulating material.

7. Device according to any one of the preceding claims, characterised in that the signal generation circuit includes an integrated circuit (12) for generating DTMF signals, connected with the buzzer (10) by a resistance in series.

8. Device according to any one of the preceding claims, characterised in that it includes a flexible sheet (11) on which the electrical circuit is produced.

9. Device according to Claim 8, characterised in that it has an integrated circuit (12) produced directly on the flexible sheet.

10. Device according to Claim 9, characterised in that the chip (13) of the integrated circuit is bonded to the flexible sheet by means of a conductive adhesive.

11. Device according to one of Claims 8 to 10, characterised in that the circuit components (14) of the surface-mounted type, and the battery and buzzer (10) are connected to the printed circuit on the flexible sheet by means of a conductive adhesive.

12. Device according to one of Claims 8 to 11, characterised in that it has a key unit (16, 17, 18) produced by a folding of the flexible sheet on itself, interposing, at this fold, insulating spacing elements (18).
